(19) Europäisches Patentamt
European Patent Office
Office européen des brevets

(11) EP 3 047 171 B1

# (12) FASCICULE DE BREVET EUROPEEN

(45) Date de publication et mention
de la délivrance du brevet:
**25.12.2019 Bulletin 2019/52**

(21) Numéro de dépôt: **14784297.5**

(22) Date de dépôt: **16.09.2014**

(51) Int Cl.:
**F16D 48/06** *(2006.01)*

(86) Numéro de dépôt international:
**PCT/FR2014/052298**

(87) Numéro de publication internationale:
**WO 2015/036718 (19.03.2015 Gazette 2015/11)**

(54) **DETERMINATION D'UN COUPLE DANS UNE CHAINE DE TRANSMISSION DE VEHICULE AUTOMOBILE**

DREHMOMENTBESTIMMUNG IN EINER KRAFTÜBERTRAGUNGSKETTE EINES MOTORFAHRZEUGS

DETERMINATION OF TORQUE IN A MOTOR VEHICLE POWER TRANSMISSION CHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2013 FR 1358878**

(43) Date de publication de la demande:
**27.07.2016 Bulletin 2016/30**

(73) Titulaire: **Valeo Embrayages**
**80009 Amiens Cedex 2 (FR)**

(72) Inventeurs:
• **LOSERO, Remi**
**F-59410 Anzin (FR)**
• **MAUREL, Pascal**
**F-75009 Paris (FR)**

• **GUERRA, Thierry Marie**
**F-59227 Saulzoir (FR)**
• **LAUBER, Jimmy**
**F-59227 Saulzoir (FR)**
• **DO, Anh Lam**
**B-4000 Liege (BE)**

(74) Mandataire: **Cardon, Nicolas et al**
**Valeo Embrayages**
**Sce Propriété Intellectuelle**
**Le Delta**
**14, avenue des Béguines**
**95892 Cergy Pontoise Cedex (FR)**

(56) Documents cités:
EP-A1- 2 135 785    EP-A1- 2 136 194
FR-A1- 2 862 732    FR-A1- 2 934 026

## Description

### Domaine technique

L'invention se rapporte au domaine des mesures de couple dans une chaîne de transmission de véhicule automobile, en particulier une chaîne de transmission à simple embrayage ou une chaîne de transmission à double embrayage.

### Arrière-plan technologique

Il est utile de posséder des mesures de couple précises dans une chaîne de transmission de véhicule automobile pour diverses fonctions, notamment pour effectuer un pilotage précis d'un ou plusieurs dispositifs d'accouplement agencés dans la chaine de transmission.

Un véhicule automobile comprend généralement un dispositif d'accouplement entre un arbre moteur du véhicule automobile, qui est entraîné en rotation par un moteur à combustion interne et/ou un moteur électrique, et un arbre d'entrée de la boîte de vitesses. La boîte de vitesses peut être du type mécanique à plusieurs rapports de transmission avec ou sans robotisation des changements de rapports.

Le dispositif d'accouplement est en général un embrayage à friction, commandé par un actionneur piloté par un système de traitement de l'information en fonction d'un certain nombre de paramètres mesurés ou estimés tels que des positions, des vitesses, des accélérations, des efforts, des couples, des pressions et des tensions électriques. L'actionneur de commande de l'embrayage agit sur la position d'un organe mobile de cet embrayage, tel par exemple que la butée d'embrayage, qui détermine la position d'un plateau de pression et la charge appliquée à ce plateau par un diaphragme annulaire pour le serrage des garnitures de friction d'un disque relié à un arbre d'entrée de la boîte de vitesses, ce serrage déterminant le couple transmis par l'embrayage.

L'actionneur peut aussi agir directement sur la charge appliquée sur le plateau de pression par une liaison mécanique ou hydraulique par exemple. La commande automatisée de l'embrayage doit prendre en compte un grand nombre de grandeurs physiques, de grandeurs d'état et de grandeurs de commande qui sont mesurées ou estimées sur le moteur, sur la boîte de vitesses et sur le reste du véhicule, et de signaux représentant la volonté du conducteur, l'adaptation du comportement de la transmission au style de conduite du conducteur, l'état dynamique du véhicule et l'état du module de commande (initialisation, mode normal, mode dégradé, apprentissage, arrêt, ....) etc.

WO-A-2010007321 décrit un module de commande en couple des deux embrayages d'une chaîne de transmission. Ce module de commande comporte un estimateur du couple transmis par le double embrayage. Un inconvénient de cet estimateur réside dans le fait que l'estimation du couple dans l'embrayage repose sur la précision de l'information de couple moteur fournie par le calculateur moteur. Cette information n'est généralement précise que dans les phases de régime moteur stabilisé, alors qu'elle peut être entachée d'une très forte erreur lors des phases de forte dynamique comme le décollage ou le changement de rapport de transmission. En outre, cet estimateur ne présente pas une condition d'observabilité suffisante pour reconstruire le couple dans chacun des deux embrayages quand les deux embrayages transmettent un couple en même temps, notamment dans la phase de transfert de couple d'un embrayage sur l'autre pendant le changement de rapport.

FR 2 934 026-A1 décrit un module de pilotage en couple de moyens d'accouplement à friction d'une chaîne de transmission de véhicule automobile comportant un observateur d'états mettant en oeuvre un modèle mathématique dynamique simulant le comportement dynamique de tous les organes tournants de la chaîne de transmission.

### Résumé

Une idée à la base de l'invention est de fournir des méthodes et dispositifs de mesure qui permettent de déterminer le couple transmis par un ou plusieurs embrayages sans dépendre de la précision d'une information de couple moteur. Certains aspects de l'invention visent en outre à fournir une méthode d'estimation qui permet d'estimer le couple dans chaque embrayage d'une transmission à double embrayage dans toutes les phases de fonctionnement, notamment pendant les phases de transfert de couple d'un embrayage sur l'autre pendant le changement de rapport. Certains aspects de l'invention partent de l'idée de déterminer le couple transmis par un ou plusieurs embrayages essentiellement à partir de la mesure de déplacement angulaire des arbres, notamment au moyen d'un ou plusieurs capteurs de déplacement angulaire à haute résolution.

Selon un mode de réalisation, l'invention fournit un procédé pour déterminer un couple dans une chaîne de transmission de véhicule automobile, dans lequel on emploie une chaîne de transmission comportant un arbre d'entrée destiné à être accouplé à un moteur du véhicule automobile, un arbre de sortie destiné à être accouplé à des roues motrices du véhicule automobile et une boîte de vitesse comportant une pluralité d'engrenages synchroniseurs aptes à respectivement accoupler l'arbre de sortie à l'arbre d'entrée selon une pluralité de rapports de transmission, le procédé comportant :

mesurer une vitesse de rotation de l'arbre d'entrée,
mesurer une vitesse de rotation de l'arbre de sortie,
fournir un modèle numérique mis en oeuvre par ordinateur qui simule la chaîne de transmission par un système déformable en torsion, le modèle numérique comportant un coefficient de raideur de torsion du système déformable, un coefficient d'amortissement visqueux en torsion du système déformable et une pluralité de variables d'état représentant un état instantané du système déformable en torsion, dans lequel les variables d'état sont choisies dans l'ensemble constitué exhaustivement de :

la vitesse de rotation de l'arbre d'entrée, la vitesse de rotation de l'arbre de sortie, le couple d'entrée agissant sur l'arbre d'entrée,
les dérivées et intégrales temporelles à tous les ordres des variables précédentes, et
les combinaisons des variables précédentes et de leurs dérivées et intégrales temporelles à tous les ordres,

et dans lequel les variables d'état comportent une variable de sortie choisie dans l'ensemble constitué des vitesses de rotation de l'arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres,
calculer les variables d'état du modèle numérique à des instants successifs en faisant converger la variable de sortie avec les vitesses de rotation de l'arbre d'entrée et de l'arbre de sortie mesurées,
et déterminer le couple d'entrée agissant sur l'arbre d'entrée à des instants successifs en fonction des variables d'état calculées.

Selon des modes de réalisation, un tel procédé de détermination de couple peut comporter une ou plusieurs des caractéristiques suivantes.
Selon un mode de réalisation, la chaîne de transmission employée comporte deux arbres d'entrée destinés à être accouplés au moteur du véhicule automobile indépendamment l'un de l'autre, la boîte de vitesse comportant une première demi-boîte comprenant une première pluralité d'engrenages synchroniseurs aptes à respectivement accoupler l'arbre de sortie à un premier des deux arbres d'entrée selon une première pluralité de rapports de transmission et une deuxième demi-boîte comprenant une deuxième pluralité d'engrenages synchroniseurs aptes à respectivement accoupler l'arbre de sortie à un deuxième des deux arbres d'entrée selon une deuxième pluralité de rapports de transmission.
Dans ce cas, le procédé comporte :

mesurer une vitesse de rotation de chacun des deux arbres d'entrée,
mesurer une vitesse de rotation de l'arbre de sortie,
fournir un premier et un deuxième modèles numériques mis en oeuvre par ordinateur qui simulent la première, respectivement deuxième, demi-boîte par un premier, respectivement deuxième, système déformable en torsion, le premier, respectivement deuxième, modèle numérique comportant un premier, respectivement deuxième coefficient de raideur de torsion du système déformable,
un premier, respectivement deuxième coefficient d'amortissement visqueux en torsion du système déformable et une pluralité de premières, respectivement deuxièmes variables d'état représentant un état instantané du système déformable en torsion, dans lequel les premières, respectivement deuxièmes variables d'état sont choisies dans l'ensemble constitué exhaustivement de :

la vitesse de rotation du premier, respectivement deuxième, arbre d'entrée, la vitesse de rotation de l'arbre de sortie, le couple d'entrée agissant sur le premier, respectivement deuxième, arbre d'entrée,
les dérivées et intégrales temporelles à tous les ordres des variables précédentes, et
les combinaisons des variables précédentes et de leurs dérivées et intégrales temporelles à tous les ordres,

et dans lequel les premières, respectivement deuxièmes variables d'état comportent une première, respectivement deuxième variable de sortie choisie dans l'ensemble constitué des vitesses de rotation du premier, respectivement deuxième arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres,
calculer les premières, respectivement deuxièmes, variables d'état du premier, respectivement deuxième modèle numérique à des instants successifs en faisant converger la première, respectivement deuxième, variable de sortie avec les vitesses de rotation de l'arbre d'entrée et de l'arbre de sortie mesurées,

et déterminer le couple d'entrée agissant sur le premier, respectivement deuxième, arbre d'entrée à des instants successifs en fonction des premières, respectivement deuxièmes, variables d'état calculées.

Grâce à l'utilisation de ces deux modèles numériques, à savoir un pour chaque arbre d'entrée, on obtient donc deux représentations d'états indépendantes et distinctes.

Selon un mode de réalisation, le modèle numérique comporte en outre un coefficient de frottement visqueux du système déformable.

Selon un mode de réalisation, les variables d'état du modèle numérique sont constituées de la vitesse de rotation de l'arbre d'entrée, la dérivée temporelle de la vitesse de rotation de l'arbre d'entrée au premier ordre, la dérivée temporelle du couple d'entrée au premier ordre et la dérivée temporelle du couple d'entrée au deuxième ordre ; la variable de sortie du modèle numérique étant la vitesse de rotation de l'arbre d'entrée.

Grâce à un tel modèle observable, la mesure de la vitesse de l'arbre d'entrée permet d'estimer l'intégralité de l'état en faisant converger la variable d'état « vitesse d'arbre d'entrée » du modèle sur la mesure réelle de la vitesse d'arbre d'entrée.

De préférence dans ce cas, on détermine le couple d'entrée par intégration temporelle de la variable d'état égale à la dérivée temporelle du couple d'entrée au premier ordre.

Selon un autre mode de réalisation, les variables d'état du modèle numérique comportent la vitesse de rotation de l'arbre de sortie et le modèle numérique impose une dynamique prédéfinie de la vitesse de rotation de l'arbre de sortie. Par exemple, dans une équation dynamique au premier ordre, le modèle calcule la dérivée temporelle au premier ordre de la vitesse de rotation de l'arbre de sortie en multipliant la vitesse de rotation de l'arbre de sortie par un coefficient de proportionnalité négatif.

Grâce à un tel modèle, on peut imposer une dynamique prédéfinie sur la variable « vitesse de l'arbre de sortie », ce qui permet de simplifier le modèle et de le rendre observable tout en assurant la reconstruction exacte de cette variable.

De préférence dans ce cas, les variables d'état du modèle numérique sont constituées de la vitesse de rotation de l'arbre d'entrée, la vitesse de rotation de l'arbre de sortie et le couple d'entrée ; les variables de sortie du modèle numérique étant la vitesse de rotation de l'arbre d'entrée et la vitesse de rotation de l'arbre de sortie.

Selon un autre mode de réalisation, les variables d'état du modèle numérique sont constituées de la vitesse de rotation de l'arbre d'entrée, la différence entre le couple d'entrée et un couple prélevé par la déformation élastique du système déformable et la dérivée temporelle au premier ordre de la différence entre le couple d'entrée et le couple prélevé par la déformation élastique du système déformable ; la variable de sortie du modèle numérique étant la vitesse de rotation de l'arbre d'entrée.

De préférence dans ce cas, on détermine le couple d'entrée à partir de la variable d'état égale à la différence entre le couple d'entrée et le couple prélevé par la déformation élastique du système déformable, le procédé comportant en outre :

calculer une vitesse de déformation instantanée par différence entre la vitesse de rotation de l'arbre d'entrée multiplié par un rapport de transmission actif de la boite de vitesse et la vitesse de rotation de l'arbre de sortie, calculer une intégrale temporelle au premier ordre de la vitesse de déformation instantanée, et calculer le couple prélevé par la déformation élastique du système déformable à partir de l'intégrale temporelle au premier ordre de la vitesse de déformation instantanée.

De préférence dans ce cas, on détermine le couple d'entrée à partir de la variable d'état égale à la dérivée temporelle au premier ordre de la différence entre le couple d'entrée et le couple prélevé par la déformation élastique du système déformable, le procédé comportant en outre :

calculer une vitesse de déformation instantanée par différence entre la vitesse de rotation de l'arbre d'entrée multiplié par un rapport de transmission actif de la boite de vitesse et la vitesse de rotation de l'arbre de sortie, et calculer une intégrale temporelle au premier ordre de la différence entre ladite variable d'état et un facteur proportionnel à la vitesse de déformation instantanée.

Selon un mode de réalisation, la vitesse de rotation de l'arbre d'entrée et/ou la vitesse de rotation de l'arbre de sortie est mesurée à l'aide d'un capteur physique présentant une résolution angulaire inférieure ou égale à $1/400^e$ de tour, de préférence inférieure ou égale à $1/600^e$ de tour. Ces caractéristiques sont avantageuses notamment pour une ouverture de boîte allant de 4 à 8.

Selon un mode de réalisation, le procédé comporte en outre, pour estimer un couple moteur du moteur du véhicule automobile en fonction du couple d'entrée agissant sur l'arbre d'entrée, les étapes de :

mesurer une vitesse de rotation du moteur,

fournir un modèle numérique de moteur mis en oeuvre par ordinateur qui simule le moteur de véhicule par un système tournant indéformable dans lequel le couple d'entrée est soustrait au couple moteur, le modèle numérique de moteur comportant un moment d'inertie du moteur et un coefficient de frottement visqueux du moteur et une pluralité de variables d'état incluant la vitesse de rotation du moteur et le couple moteur,

calculer les variables d'état du modèle numérique de moteur à des instants successifs en faisant converger la vitesse de rotation du moteur calculée avec la vitesse de rotation du moteur mesurée.

De préférence dans ce cas, le procédé comporte en outre :

détecter que l'arbre d'entrée ou un des arbres d'entrées reçoit la totalité du couple moteur,
estimer le coefficient de raideur de torsion du modèle numérique qui simule la chaîne de transmission comprenant ledit arbre d'entrée en fonction du couple moteur calculé par le modèle numérique de moteur. Ces caractéristiques permettent notamment d'effectuer un recalage de la raideur sur le couple moteur calculé en phase de régime stabilisé.

Selon un mode de réalisation, l'invention fournit aussi un système de mesure pour déterminer un couple dans une chaîne de transmission de véhicule automobile, convenant pour une chaîne de transmission comportant un arbre d'entrée destiné à être accouplé à un moteur du véhicule automobile, un arbre de sortie destiné à être accouplé à des roues motrices du véhicule automobile et une boîte de vitesse comportant une pluralité d'engrenages synchroniseurs aptes à respectivement accoupler l'arbre de sortie à l'arbre d'entrée selon une pluralité de rapports de transmission, le système de mesure comportant :

un capteur physique d'entrée apte à mesurer une vitesse de rotation de l'arbre d'entrée,
un capteur physique de sortie apte à mesurer une vitesse de rotation de l'arbre de sortie,
un dispositif de calcul mis en oeuvre par ordinateur fournissant un modèle numérique qui simule la chaîne de transmission par un système déformable en torsion, le modèle numérique comportant un coefficient de raideur de torsion du système déformable, un coefficient d'amortissement visqueux en torsion du système déformable et une pluralité de variables d'état représentant un état instantané du système déformable en torsion, dans lequel les variables d'état sont choisies dans l'ensemble constitué exhaustivement de :

la vitesse de rotation de l'arbre d'entrée, la vitesse de rotation de l'arbre de sortie, le couple d'entrée agissant sur l'arbre d'entrée,
les dérivées et intégrales temporelles à tous les ordres des variables précédentes, et
les combinaisons des variables précédentes et de leurs dérivées et intégrales temporelles à tous les ordres,

et dans lequel les variables d'état comportent une variable de sortie choisie dans l'ensemble constitué des vitesses de rotation de l'arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres,
un dispositif de calcul étant apte à calculer les variables d'état du modèle numérique à des instants successifs en faisant converger la variable de sortie avec les vitesses de rotation de l'arbre d'entrée et de l'arbre de sortie mesurées, et à déterminer le couple d'entrée agissant sur l'arbre d'entrée à des instants successifs en fonction des variables d'état calculées.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- La figure 1 est une représentation schématique d'une chaine de transmission à double embrayage dans un véhicule automobile vu de dessus.

- La figure 2 est un schéma en blocs fonctionnels représentant la chaine de transmission de la figure 1 et un dispositif de mesure de couple qui lui est associé.

- La figure 3 est une représentation canonique d'un estimateur à entrée inconnue pouvant être mis en oeuvre par ordinateur pour déterminer les états d'un système.

EP 3 047 171 B1

- La figure 4 est une représentation fonctionnelle d'un modèle physique de chaîne de transmission pouvant être employé dans un estimateur de couple.

- Les figures 5 et 6 représentent respectivement un estimateur de couple selon un premier mode de réalisation et des paramètres de cet estimateur.

- La figure 7 représente un estimateur de couple selon un deuxième mode de réalisation et des paramètres de cet estimateur.

- La figure 8 représente un estimateur de couple selon un deuxième mode de réalisation et des paramètres de cet estimateur.

- La figure 9 est un schéma en blocs fonctionnels représentant un dispositif de commande d'embrayage dans lequel des estimateurs de couple peuvent être employés.

**Description détaillée de modes de réalisation**

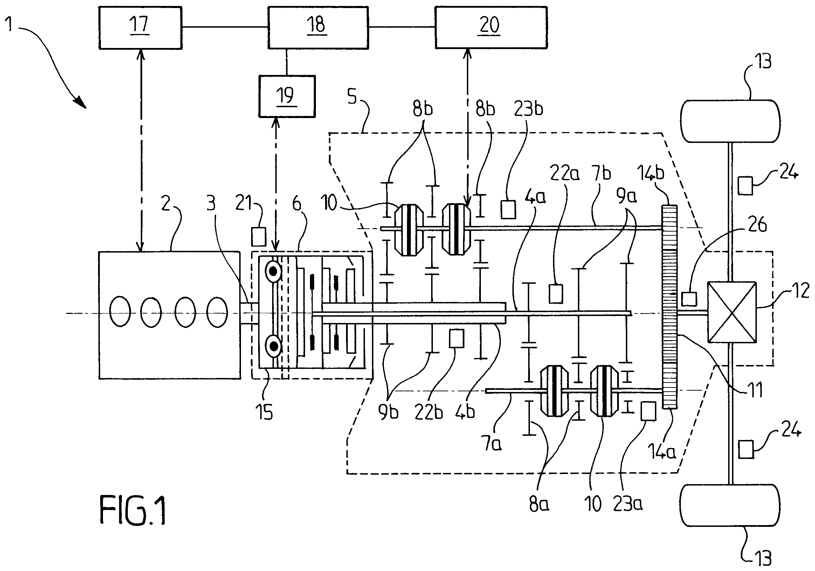

La figure 1 illustre l'architecture d'un système de transmission robotisé à double embrayage d'un véhicule automobile 1. Le véhicule 1 comporte un moteur thermique 2 dont l'arbre de sortie ou vilebrequin 3 est relié aux deux arbres primaires 4a et 4b d'une boîte de vitesses 5 via un double embrayage 6. Chaque arbre primaire 4a et 4b est lié à un disque de friction respectif du double embrayage 6. Le double embrayage 6 permet de lier par frottement l'un ou/et l'autre des deux arbres primaires 4a et 4b au volant moteur 15 afin de transmettre le couple moteur.
La boîte de vitesses 5 comporte deux arbres secondaires 7a et 7b respectivement parallèles aux arbres primaires 4a et 4b. Chaque arbre secondaire 7a, respectivement 7b, est équipé de pignons fous 8a, respectivement 8b, qui coopèrent avec des pignons de vitesses 9a, respectivement 9b, portés par l'arbre primaire 4a, respectivement 4b. Chaque arbre secondaire porte également des synchroniseurs à crabot 10 permettant de solidariser en rotation les pignons fous à l'arbre secondaire de manière à transmettre un couple entre l'arbre primaire 4a ou 4b et l'arbre secondaire 7a ou 7b. Les deux arbres secondaires 7a et 7b coopèrent avec un pignon d'entrée 11 du différentiel 12 afin de transmettre le couple aux roues motrices 13.
Par exemple, l'arbre primaire 4a porte les pignons correspondant aux rapports impairs et l'arbre primaire 4b porte les pignons correspondant aux rapports pairs. Les pignons 9a et 9b des arbres primaires 4a et 4b engrènent sur les pignons fous 8a et 8b portés par les arbres secondaires 7a et 7b. Lorsque ces pignons fous sont rendus solidaires de l'arbre secondaire 7a ou 7b par la manoeuvre des synchroniseurs, le couple de l'arbre primaire correspondant est transmis à l'arbre secondaire avec la démultiplication définie par le couple d'engrenage en prise par le crabot du synchroniseur. Les arbres secondaires 7a et 7b sont connectés à l'entrée du différentiel 12 par un couple d'engrenages 14a et 14b et transmettent alors le couple vers les roues motrices 13. Ainsi, les éléments 4a, 7a, 8a et 9a constituent une demi boîte de vitesses manuelle avec de rapports impairs et les éléments 4b, 7b, 8b et 9b constituent une demi boîte de vitesses manuelle avec de rapports pairs.
Le principal intérêt d'une telle transmission à double embrayage est de pouvoir associer le bon rendement de la boîte de vitesse manuelle avec le confort d'une boite de vitesses automatique, en transférant notamment le couple moteur d'une demi boite vers l'autre demi boîte lors du changement de rapport sans interrompre le couple transmis aux roues. Un calculateur moteur 17 pilote le moteur thermique 2 et fournit des informations notamment de couple moteur, de régime moteur et d'intention conducteur à un calculateur de transmission 18 qui pilote des actionneurs d'embrayage 19 qui manoeuvrent le double embrayage 6 et des actionneurs de passage de vitesses 20 qui manoeuvrent les synchroniseurs 10.
Des capteurs de position ou de vitesse angulaire peuvent également être installés en divers emplacements pour mesurer les vitesses de rotation des divers arbres de la transmission. La figure 1 montre ainsi, à titre illustratif :

- un capteur 21 qui mesure la vitesse de rotation du volant primaire moteur 15 et est connecté au calculateur moteur 17 qui transmet via un bus de donnée l'information de vitesse moteur Wm au calculateur de transmission 18. Le capteur 21 peut être également connecté directement au calculateur de transmission 18 en plus du calculateur moteur 17 pour des raisons de temps de latence ;

- des capteurs 22a et 22b qui mesurent la vitesse de rotation des arbres primaires 4a et 4b et sont connectés au calculateur de transmission 18 ;

- des capteurs 23a et 23b mesurant la vitesse de rotation des arbres secondaires 7a et 7b, qui sont connectés directement au calculateur de transmission 18 ;

6

- un capteur 26 mesurant la vitesse de rotation de l'arbre d'entrée du différentiel 12, c'est-à-dire normalement la même information que les capteurs 23a et 23b des arbres secondaires 7a et 7b ;

- des capteurs 24 qui mesurent la vitesse de rotation des roues motrices 13 et qui sont connectés à un calculateur ABS (non représenté) qui transmet l'information sur un bus intersystème auquel le calculateur de transmission 18 est connecté.

Ces capteurs sont de préférence réalisés sous la forme de capteurs de position angulaire présentant une forte résolution sur un tour de l'arbre, par exemple au moins 400 points par tour, de préférence au moins 600 points par tour, voire idéalement 2000 à 2500 points par tour. Cette résolution élevée est utile pour pouvoir estimer les couples transmis en mesurant des déformations en torsion des arbres, comme il sera expliqué plus bas. Lorsque la mesure doit être effectuée à un régime faible avec un rapport engagé élevé, une résolution d'autant plus grande est nécessaire.

La technologie du capteur de position angulaire peut-être quelconque, notamment optique, magnétique, par exemple à effet hall ou fluxgate, ou capacitive. Dans un mode de réalisation, une cible est placée sur l'arbre dont on veut mesurer l'angle. Cette cible peut-être une cible métallique à haute résolution, un couple de plusieurs cible, une cible polaire magnétique ou un ensemble de roues polaires, ou encore un aimant collé ou assemblé sur l'arbre dont on mesure le champ qui varie avec la rotation.

Avec un capteur de position angulaire, on mesure directement l'angle, dont on dérive la vitesse de l'arbre soit en faisant la différence d'angle entre deux instants de mesure successifs, soit en réalisant un estimateur linéaire bouclé sur l'angle mesuré et estimant par reconstruction la vitesse de rotation.

Dans un mode de réalisation, l'estimateur de vitesse met en oeuvre un modèle numérique du type :

$$\frac{d\hat{\alpha}}{dt} = -\frac{1}{\tau}\hat{\alpha} + L(\alpha - \hat{\alpha})$$

Où $\alpha$ désigne l'angle mesuré et $\hat{\alpha}$ désigne l'angle estimé, et où $\tau$ et L sont deux paramètres fixés choisis en fonction de la précision souhaitée sur l'information vitesse de l'arbre $\frac{d\hat{\alpha}}{dt}$.

Pour gérer le pilotage des embrayages, le calculateur de transmission 18 a besoin de déterminer le couple transmis par chaque embrayage du double embrayage 6. On va maintenant décrire des estimateurs de couple selon plusieurs modes de réalisation pouvant être employés pour cela. Suivant les modes de réalisation, il est possible d'utiliser un sous-ensemble des capteurs de vitesse angulaire décrits ci-dessus. La description des modes de réalisation des estimateurs ci-dessous montrera en outre quels capteurs sont nécessaires dans chaque cas.

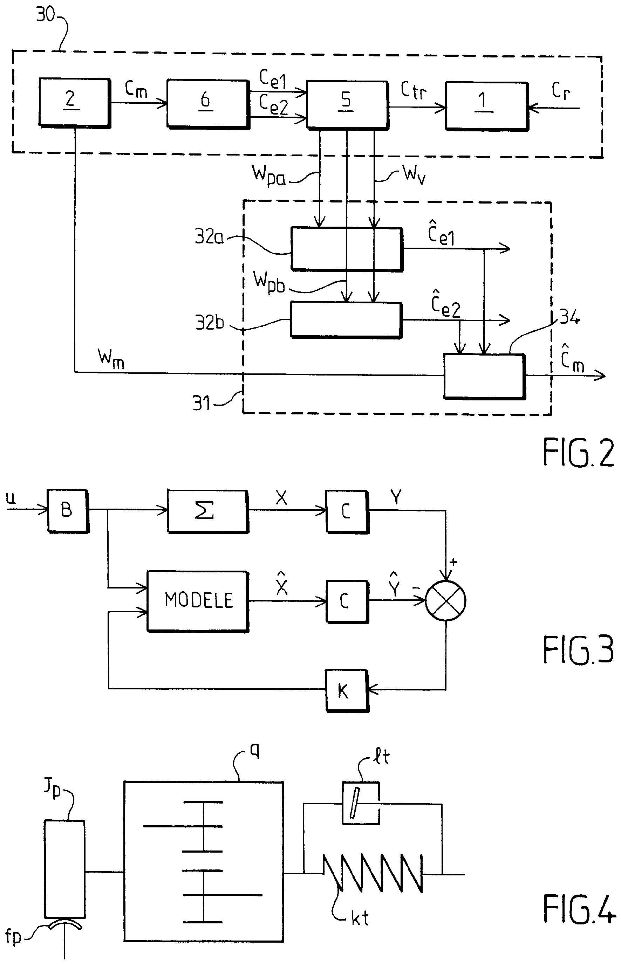

Une représentation schématique de haut niveau d'un dispositif de mesure des couples est donnée sur la figure 2. La partie supérieure 30 de la figure 2 représente une décomposition fonctionnelle du véhicule réel tel que décrit à la figure 1, dans laquelle sont identifiées des unités dynamiques exerçant des forces les unes sur les autres, à savoir : le moteur 2, le double embrayage 6 recevant un couple moteur Cm depuis le moteur 2, la boîte de vitesses 5 recevant deux couples d'entrée Ce1 et Ce2 respectivement depuis chaque embrayage du double embrayage 6, et le véhicule 1 dans son ensemble recevant d'une part un couple transmis Ctr depuis la boîte de vitesses 5 et un couple résistant global Cr représentant la résistance au roulement exercée par la chaussée sur les roues 13.

La partie inférieure 31 de la figure 2 représente une décomposition fonctionnelle du dispositif de mesure. Ce dispositif comporte deux estimateurs à entrée inconnue 32a et 32b, indépendants l'un de l'autre et fonctionnant en parallèle, chacun basé sur le modèle physique de la figure 4. Dans le premier estimateur 32a dédié à l'arbre primaire 4a, il entre la mesure de la vitesse angulaire Wpa de l'arbre primaire 4a fournie par le capteur 22a et la mesure de la vitesse angulaire Wv en sortie de la boîte de vitesse 5, qui est mesurée soit sur l'arbre secondaire 7a par le capteur 23a, soit sur les roues par moyennage des valeurs fournies par les capteurs 24, soit encore sur l'arbre d'entrée du différentiel par le capteur 26. Une meilleure robustesse de l'estimation est obtenue en utilisant un capteur situé le plus près possible de la boîte de vitesse, de sorte que l'utilisation des capteurs de vitesse des roues 24 n'est pas préférée. L'estimateur 32a construit une estimation du couple Ce1 transmis par l'embrayage 6 sur l'arbre primaire 4a, notée $\overline{C_{e1}}$.

Dans le second estimateur 32b dédié à l'arbre primaire 4b, il entre la mesure de la vitesse angulaire Wpb de l'arbre primaire 4b fournie par le capteur 22b et la mesure de la vitesse angulaire Wv en sortie de la boîte de vitesse 5, qui est mesurée soit sur l'arbre secondaire 7b par le capteur 23b, soit sur les roues par moyennage des valeurs fournies par les capteurs 24, soit encore sur l'arbre d'entrée du différentiel par le capteur 26. L'estimateur 32b construit une estimation du couple Ce2 transmis par l'embrayage 6 sur l'arbre primaire 4b, notée $\overline{C_{e2}}$.

Un troisième estimateur à entrée inconnue 34, basé sur un modèle physique constitué de l'inertie du moteur 2, permet de construire une estimation du couple moteur Cm, notée $\overline{C_m}$. L'estimateur 34 intègre la différence entre le couple moteur Cm et la somme des couples d'embrayage estimés $C_{e1}$ et $C_{e2}$ pour déduire la vitesse moteur Wm. Il reçoit en entrée la mesure du régime moteur Wm fournie par le capteur 21 et les couples estimés $\overline{C_{e1}}$ et $\overline{C_{e3}}$ fournis par les deux autres estimateurs 32a et 32b.

En référence à la figure 3, on expose quelques principes de fonctionnement généraux d'un estimateur à entrée inconnue servant à estimer l'état X d'un système Σ.

L'état X est un vecteur constitué de plusieurs variables d'état, dont certaines sont mesurées et d'autres ne sont pas mesurées. La matrice d'observation C extrait les variables d'état mesurées, c'est-à-dire que l'état mesuré Y=CX est le vecteur d'état réduit aux variables d'état effectivement mesurées dans le système rèel Σ. Le système réagit à une sollicitation extérieure Bu représentée par un vecteur d'excitation u comportant une ou plusieurs variables d'excitation multiplié par une matrice de gain B.

Parallèlement à ce système réel muni de capteurs de mesure, un modèle numérique est mis en oeuvre pour estimer l'état complet du système, et donc notamment les variables d'état qui ne sont pas mesurées. On note $\hat{X}$ l'état estimé à partir du modèle. On applique la même matrice d'observation C à l'état estimé $\hat{X}$ et on calcule la différence entre l'état mesuré Y et l'état estimé de sortie $\hat{Y} = C.\hat{X}$. A partir de cette différence et d'un gain K, on calcule un paramètre d'erreur $\varepsilon = K.(Y - \hat{Y})$ qui est réinjecté dans le modèle pour faire converger l'état estimé vers l'état réel.

En pratique une hypothèse est posée que le système réel Σ est conforme à un modèle physique possédant une évolution linéaire pouvant être caractérisée par un matrice d'évolution A, de sorte que l'état X satisfait :

$$\dot{X} = AX + Bu$$

où $\hat{X}$ désigne la dérivée temporelle de X.

Le modèle numérique est donc basé sur le système d'équations différentielles :

$$\begin{cases} \dot{\hat{X}} = A\hat{X} + Bu + K.(Y - \hat{Y}) \\ \hat{Y} = C.\hat{X} \end{cases}$$

Ces équations peuvent être résolues sous réserve de remplir une condition d'observabilité, connue de l'homme du métier des observateurs à entrée inconnue. Il faut déterminer la matrice de gain K de l'observateur telle que la matrice (A-KC) soit une matrice stable. Ce calcul s'effectue en imposant un polynôme caractéristique de la matrice (A - KC), noté $P_{but}(\lambda)$, et en résolvant l'équation $P_{but}(\lambda) = P_{A-KC}(\lambda)$. Selon la structure de la matrice d'observation C, certains éléments de la matrice de gain K sont inutiles. En effet, si la matrice d'observation C comporte des zéros, le placement de pôles ne dépend que d'une partie des gains $k_{ij}$.

La figure 4 représente schématiquement le modèle physique utilisé pour représenter une demi-boîte de vitesse dans chacun des estimateurs 32a et 32b. Ce modèle comporte :

- une masse tournante caractérisée par un moment d'inertie Jp et représentant l'inertie globale des masses tournantes de la demi-boîte (arbre primaire, arbre secondaire, pignons et synchroniseurs),

- un réducteur caractérisé par un rapport de réduction q et représentant le rapport de la vitesse de l'arbre secondaire sur la vitesse de l'arbre primaire,

- un ressort de torsion caractérisé par un coefficient de raideur de torsion kt, représentant la raideur de torsion globale des masses tournantes de la demi-boîte (arbre primaire, arbre secondaire, pignons et synchroniseurs),

- un amortisseur visqueux caractérisé par un coefficient d'amortissement visqueux en torsion lt, représentant l'amortissement visqueux de torsion des masses tournantes de la demi-boîte (dissipation interne), et

- optionnellement, un frottement visqueux caractérisé par un coefficient de frottement fp, représentant les frottements extérieurs exercés sur les masses tournantes de la demi-boîte (dissipation externe).

Ce modèle physique satisfait l'équation dynamique suivante :

$$J_p \cdot \dot{W}_p = C_e - f_p \cdot W_p - q.k_t \int (q.W_p - W_v).dt - q..\ell_t (q.W_p - W_v)$$

Pour résoudre cette équation, il est possible de faire différentes hypothèses simplificatrices quant à l'évolution dynamique de certaines variables, notamment la variable de couple estimée $C_e$, par exemple en imposant la nullité d'une dérivée temporelle d'une variable au premier ordre, au deuxième ordre ou à un ordre quelconque, ou en imposant à une variable une équation d'évolution prédéfinie, par exemple exponentielle ou linéaire.

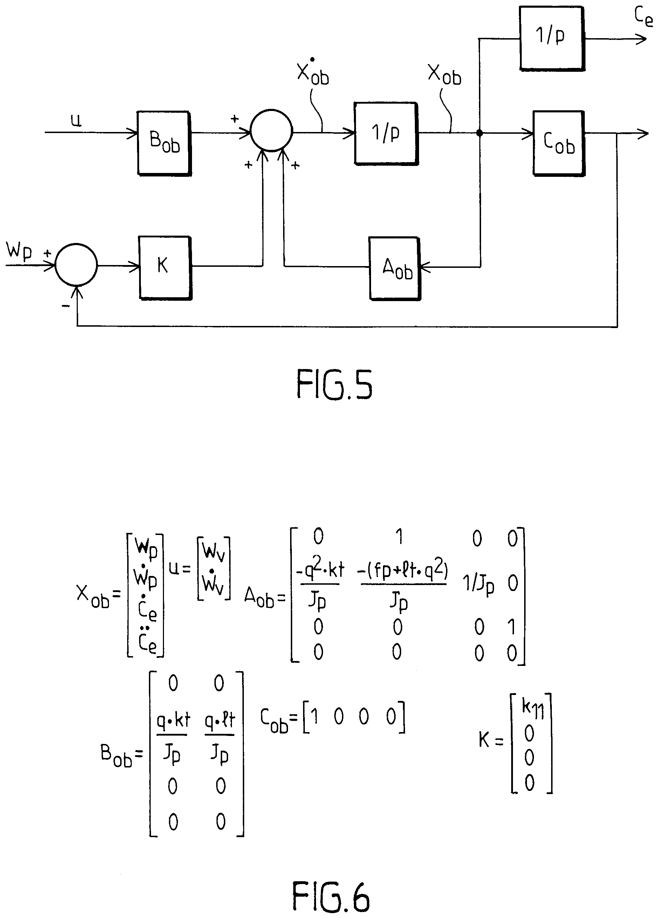

On va maintenant décrire plusieurs modes de réalisation d'estimateurs basés sur ce modèle physique, qui conviennent pour réaliser l'estimateur 32a ou 32b. Un premier mode de réalisation est représenté sur les figures 5 et 6. La figure 5 est une représentation des opérations mathématiques utilisées et la figure 6 fournit la définition des variables et des paramètres impliqués dans ces opérations mathématiques. Lorsqu'aucune opération n'est explicitée, une multiplication est sous-entendue. Par convention, la multiplication par le paramètre $1/p$ désigne une intégration temporelle. De la même manière, la multiplication par le paramètre $p$ désigne une dérivation temporelle par convention. En effet, en effectuant une transformée de Laplace, l'intégration temporelle et la dérivation temporelle peuvent être mises en oeuvre par des multiplications. Toutefois, il existe d'autres méthodes numériques possibles pour calculer l'intégration temporelle et la dérivation temporelle.

Le paramètre de gain $k_{11}$ peut être fixé selon les principes indiqués ci-dessus pour obtenir une matrice stable.

Dans ce premier mode de réalisation, la seule variable mesurée est la vitesse angulaire Wp de l'arbre primaire. Les variables d'état sont la vitesse angulaire Wp, sa dérivée temporelle au premier ordre, et les dérivées temporelles du couple d'entrée $C_e$ au premier ordre et au deuxième ordre. La dérivée temporelle du couple d'entrée $C_e$ au troisième ordre est nulle par construction. Le vecteur d'excitation u comprend la vitesse angulaire de sortie Wv et sa dérivée par rapport au temps. On constate donc que le couple d'entrée estimé $C_e$ est finalement obtenu comme la troisième composante du vecteur d'état $X_{ob}$ intégré dans le temps.

Cette valeur de couple $C_e$ ne dépend alors ni de la connaissance de l'information couple moteur à l'instant t, ni de la valeur actuelle de la masse du véhicule, ni de la charge du véhicule. La précision de la valeur dépend de l'exactitude du paramètre de raideur kt. Ce paramètre peut être ajusté au cours du temps comme il sera décrit plus bas.

En variante, d'autres évolutions dynamiques du couple d'entrée $C_e$ pourraient être imposées, par exemple la nullité de sa dérivée temporelle à un ordre plus élevé ou plus faible.

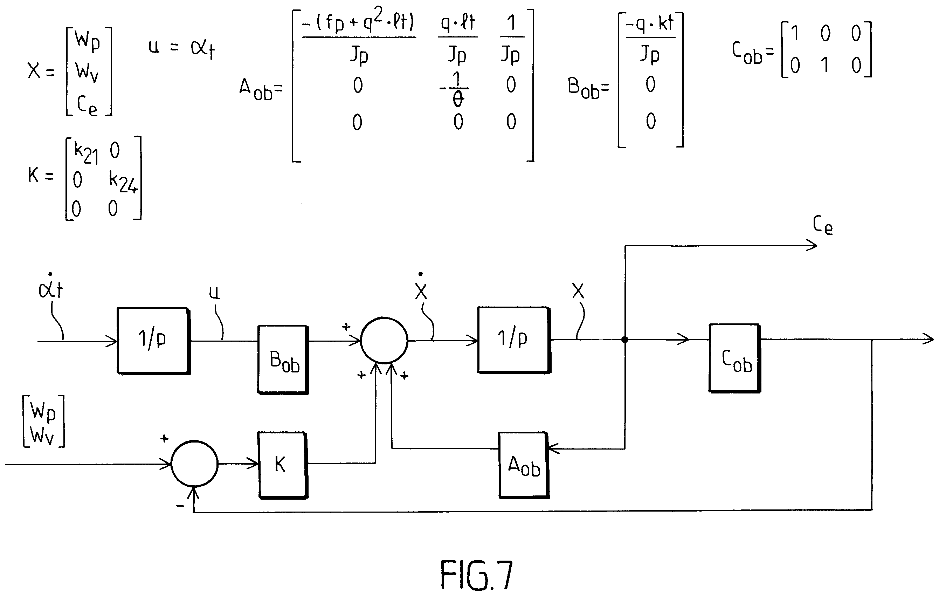

Un deuxième mode de réalisation est représenté sur la figure 7 où les mêmes conventions de représentation sont utilisées. Dans ce cas, le vecteur d'état X reconstruit par l'estimateur comprend la vitesse angulaire de l'arbre primaire Wp, la vitesse angulaire de sortie Wv et le couple d'entrée $C_e$, qui constitue l'entrée inconnue. Les variables mesurées sont la vitesse angulaire Wp de l'arbre primaire et la vitesse angulaire de sortie Wv.

Une évolution dynamique est imposée à la vitesse angulaire de sortie Wv, telle que :

$$\frac{dWv}{dt} = -\frac{1}{\theta}Wv.$$

On note $\alpha_t$ l'angle de déformée du ressort de torsion, dont la dérivée est mesurée à partir de la vitesse primaire Wp, de la vitesse de sortie Wv et du rapport de réduction q par :

$$\dot{\alpha}_t = q\,Wp - Wv$$

Cet estimateur repose sur l'hypothèse que le couple d'entrée $C_e$ est lentement variable dans le temps, de sorte que sa dérivée temporelle au premier ordre est nulle par construction.

Les paramètres de gain $k_{21}$ et $k_{24}$ peuvent être fixés selon les principes indiqués ci-dessus pour obtenir une matrice stable.

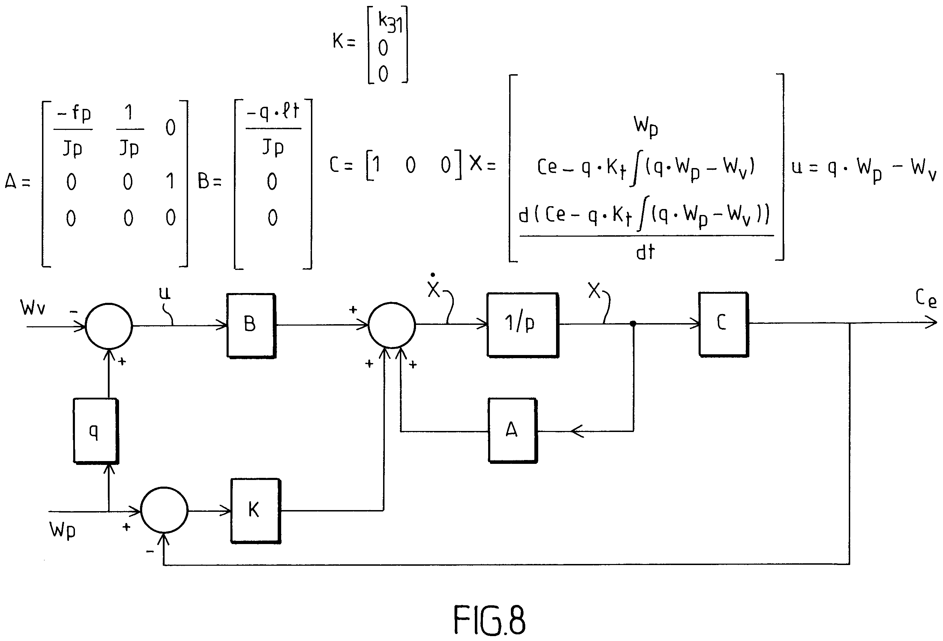

Un troisième mode de réalisation est représenté sur la figure 8 où les mêmes conventions de représentation sont utilisées. Le vecteur d'état comprend la vitesse angulaire de l'arbre primaire Wp, le couple embrayage moins le couple prélevé par le ressort de torsion, ainsi que la dérivée de cette quantité par rapport au temps. Le couple prélevé par le ressort de torsion est égal à la raideur kt que multiplie l'angle de déformée du ressort de torsion $\alpha_t$ et multiplié par la valeur du rapport de boîte de vitesse engagé, à savoir le rapport de réduction q.

Le vecteur d'excitation u est constitué de $\dot{\alpha}_t = q\,Wp - Wv$.

Le paramètre de gain $k_{31}$ peut être fixé selon les principes indiqués ci-dessus pour obtenir une matrice stable.

Pour obtenir finalement le couple embrayage $C_e$, on part de la deuxième composante du vecteur d'état X à laquelle on ajoute le couple prélevé par le ressort de torsion, qui est calculé à partir des vitesses angulaires mesurées Wp et Wv.

Dans tous les cas, on obtient une estimation du couple Ce transmis par l'embrayage à l'arbre d'entrée sans faire appel à l'information de couple moteur fournie par le contrôleur moteur 17. Cette estimation peut être utilisée pour déterminer une valeur du couple moteur $C_m$ précise dans les phases dynamiques lorsque le contrôleur moteur 17 ne permet pas d'estimer avec précision cette information. Un mode de réalisation de l'estimateur 34 va maintenant être décrit pour cela.

Le modèle numérique utilisé pour l'estimation du couple moteur $C_m$ est défini par l'équation de dynamique :

$$J_m \cdot \dot{\omega}_m = C_m - f_m \cdot \omega_m - \hat{C}_{e_1} - \hat{C}_{e_2}$$

avec :

- $J_m$ : moment d'inertie du moteur

- $\omega_m$ : vitesse angulaire du moteur

- $f_m$ : coefficient de frottement visqueux appliqué sur l'arbre moteur

- $\hat{C}_{e_1}$ et $\hat{C}_{e_2}$ : les couples transmis par les embrayages 1 et 2, qui sont estimés par les estimateurs de couple décrits plus haut.

La représentation d'état du modèle est comme suit :

$$\dot{\omega}_m = \left[ -\frac{f_m}{J_m} \right] \cdot [\omega_m] + \left[ \frac{1}{J_m} \quad -\frac{1}{J_m} \quad -\frac{1}{J_m} \right] \cdot \begin{bmatrix} C_m \\ \hat{C}_{e_1} \\ \hat{C}_{e_2} \end{bmatrix}$$

Afin d'estimer le couple moteur, il faut l'intégrer dans l'état. Pour se faire, on pose $\ddot{C}_m = 0$ ; le modèle devient alors :

$$\begin{bmatrix} \dot{\omega}_m \\ \dot{C}_m \\ \ddot{C}_m \end{bmatrix} = \begin{bmatrix} -\frac{f_m}{J_m} & \frac{1}{J_m} & 0 \\ 0 & 0 & 1 \\ 0 & 0 & 0 \end{bmatrix} \cdot \begin{bmatrix} \omega_m \\ C_m \\ \dot{C}_m \end{bmatrix} + \begin{bmatrix} -\frac{1}{J_m} & -\frac{1}{J_m} \\ 0 & 0 \\ 0 & 0 \end{bmatrix} \cdot \begin{bmatrix} \hat{C}_{e_1} \\ \hat{C}_{e_2} \end{bmatrix}$$

$$y = CX = \begin{bmatrix} 1 & 0 & 0 \end{bmatrix} \cdot \begin{bmatrix} \omega_m \\ C_m \\ \dot{C}_m \end{bmatrix}$$

L'observabilité de ce modèle se vérifie avec le critère de Kalman :

$$rank \begin{bmatrix} C \\ CA \\ CA^2 \end{bmatrix} = 3 \,.$$

Le système est donc observable. On peut alors estimer le couple moteur en tant que deuxième composante de l'état X, en faisant converger la variable de sortie $\omega_m$ avec la mesure de la vitesse moteur.

On note toutefois que la valeur de couple $C_m$ donnée par le calculateur moteur 17 est généralement correcte dans les phases à régime stabilisé, notamment quand un seul embrayage transmet un couple (rapport de boîte de vitesse engagé et stable). Dans ces conditions, il est réciproquement possible d'utiliser cette estimation correcte du couple moteur $C_m$ pour ajuster les estimateurs 32a et 32b servant à reconstruire les couples $C_{e1}$ et $C_{e2}$ des embrayages, et notamment les valeurs numériques des paramètres de ces estimateurs, tels que la raideur de torsion kt. Pour ajuster que la raideur de torsion kt d'un estimateur 32a ou 32b, on reconstruit le couple moteur avec l'estimateur 34 comme indiqué ci-dessus, dans une phase à régime stabilisé à un moment où seul l'embrayage correspondant à cette estimateur transmet un couple et l'autre couple d'embrayage est nul, et on compare cette estimation avec la valeur donnée par le calculateur moteur 17 dans les mêmes conditions. L'écart permet de corriger la raideur de torsion kt ou d'autres paramètres du modèle physique employé.

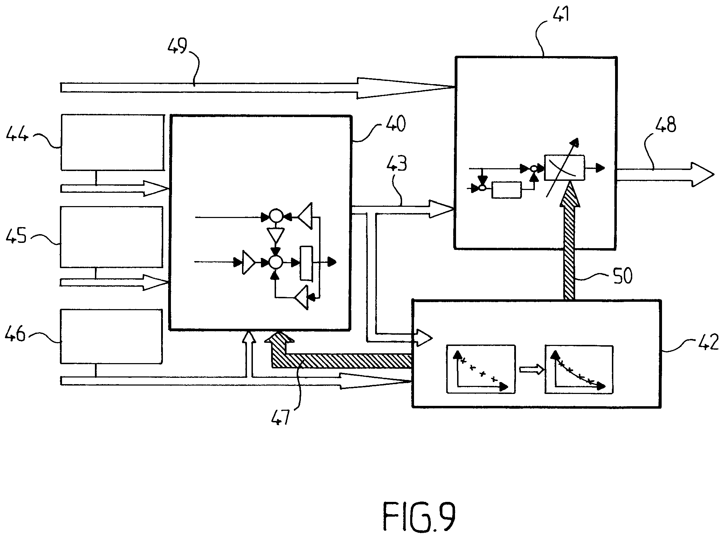

En référence à la figure 9, on va maintenant décrire un système de commande d'un embrayage dans lequel un estimateur de couple tel que décrit ci-dessus peut être employé.

Le système de commande représenté sur la figure 9 est constitué de trois modules fonctionnels principaux : un module d'estimation du couple 40, un module de correction du couple 41 et un module d'apprentissage de la caractéristique de couple 42.

Le module d'estimation du couple 40 calcule en temps réel le couple transmis par l'embrayage ainsi que la capacité de couple 43 à partir :

- des informations dynamiques 44 du moteur thermique et/ou de la machine électrique d'une chaîne de traction hybride, telles que la vitesse moteur, et le couple moteur,
- des informations dynamiques 45 du véhicule telles que la vitesse de l'arbre primaire, le rapport de transmission engagé et la vitesse du véhicule,
- des informations de position 46 des actionneurs d'embrayage, et
- des courbes caractéristiques apprises 47 représentant le couple transmis en fonction de la position de l'embrayage.

Le module de correction de couple 41 calcule les consignes de position 48 à appliquer à l'actionneur d'embrayage 19 de façon à atteindre en temps réel la consigne de couple 49 demandée par le contrôleur de transmission 18 sur l'embrayage concerné. Ces consignes sont calculées en fonction de l'estimation de la capacité de couple actuelle 43 et de la courbe caractéristique 50 représentant la position de l'embrayage en fonction du couple à transmettre. Cette correction de couple permet d'ajuster rapidement en temps réel le couple transitant dans l'embrayage face aux variations rapide engendrées par la modification du coefficient de frottement de l'embrayage sous l'effet de la température et de compenser ainsi l'écart entre la courbe apprise 47 et la réalité à un instant donné.

Le module d'apprentissage des caractéristiques de couple d'embrayage 42 identifie et met à jour les paramètres des courbes 47 et 50 à chaque opération d'embrayage afin de suivre les phénomènes lents tels que l'usure et les dispersions de fabrication. Cette mise à jour est effectuée à partir des informations de capacité de couple estimée de l'embrayage 43 et de la position mesurée de l'actionneur d'embrayage 19.

D'autres caractéristiques d'un tel système de commande sont fournies dans la publication FR-A-2863327.

Les méthodes d'estimation de couple décrites ci-dessus en référence à un double embrayage et à un moteur thermique s'appliquent aussi à d'autres systèmes de transmission, notamment à simple embrayage, à moteur électrique et à motorisation hybride thermique et électrique.

Certains des éléments représentés, notamment les estimateurs de couple, les contrôleurs et les unités de commande, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation interprétés ou compilés, par exemple C, C++, Java ou VHDL. Cette liste n'est pas exhaustive.

Lorsque l'estimation dépend d'un paramètre pouvant prendre plusieurs valeurs, notamment les rapports de réduction q de la boite de vitesse, il est possible de mettre en oeuvre plusieurs calculateurs fonctionnant parallèlement chacun avec une valeur distincte du paramètre, ce qui permet de sélectionner très rapidement l'estimation pertinente à tout instant en sélectionnant le résultat fourni par le calculateur qui correspond à la valeur réelle du paramètre à l'instant concerné.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

**Revendications**

1. Procédé pour déterminer un couple (Ce) dans une chaîne de transmission de véhicule automobile (1), dans lequel on emploie une chaîne de transmission comportant un arbre d'entrée (4a, 4b) destiné à être accouplé à un moteur (2) du véhicule automobile, un arbre de sortie (7a, 7b) destiné à être accouplé à des roues motrices (13) du véhicule automobile et une boîte de vitesse (5) comportant une pluralité d'engrenages synchroniseurs (8a, 8b) aptes à respectivement accoupler l'arbre de sortie à l'arbre d'entrée selon une pluralité de rapports de transmission, le procédé comportant :

mesurer une vitesse de rotation (Wp) de l'arbre d'entrée,
mesurer une vitesse de rotation (Wv) de l'arbre de sortie,
fournir un modèle numérique mis en oeuvre par ordinateur (32a, 32b) qui simule la chaîne de transmission par un système déformable en torsion, le modèle numérique comportant un coefficient de raideur de torsion (kt) du système déformable, un coefficient d'amortissement visqueux en torsion (lt) du système déformable et une pluralité de variables d'état (X) représentant un état instantané du système déformable en torsion, dans lequel les variables d'état sont choisies dans l'ensemble constitué exhaustivement de :

la vitesse de rotation (Wp) de l'arbre d'entrée, la vitesse de rotation de l'arbre de sortie (Wv), le couple d'entrée (Ce) agissant sur l'arbre d'entrée,
les dérivées et intégrales temporelles à tous les ordres des variables précédentes, et
les combinaisons des variables précédentes et de leurs dérivées et intégrales temporelles à tous les ordres,

et dans lequel les variables d'état comportent une variable de sortie ($\hat{Y}$) choisie dans l'ensemble constitué des vitesses de rotation (Wp, Wv) de l'arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres,
calculer les variables d'état (X) du modèle numérique à des instants successifs en faisant converger la variable de sortie ($\hat{Y}$) avec les vitesses de rotation de l'arbre d'entrée et de l'arbre de sortie mesurées,
et déterminer le couple d'entrée (Ce) agissant sur l'arbre d'entrée à des instants successifs en fonction des variables d'état calculées.

2.  Procédé selon la revendication 1, dans lequel la chaîne de transmission employée comporte deux arbres d'entrée (4a, 4b) destinés à être accouplés au moteur du véhicule automobile indépendamment l'un de l'autre, la boîte de vitesse comportant une première demi-boîte comprenant une première pluralité d'engrenages synchroniseurs (8a) aptes à respectivement accoupler l'arbre de sortie à un premier (4a) des deux arbres d'entrée selon une première pluralité de rapports de transmission et une deuxième demi-boîte comprenant une deuxième pluralité d'engrenages synchroniseurs (8b) aptes à respectivement accoupler l'arbre de sortie à un deuxième des deux arbres d'entrée (4b) selon une deuxième pluralité de rapports de transmission,
dans lequel le procédé comporte :

mesurer une vitesse de rotation de chacun des deux arbres d'entrée (Wp1, Wp2), mesurer une vitesse de rotation de l'arbre de sortie (Wv),
fournir un premier et un deuxième modèles numériques mis en oeuvre par ordinateur (32a, 32b) qui simulent la première, respectivement deuxième, demi-boîte par un premier, respectivement deuxième, système déformable en torsion, le premier, respectivement deuxième, modèle numérique comportant un premier, respectivement deuxième coefficient de raideur de torsion du système déformable, un premier, respectivement deuxième coefficient d'amortissement visqueux en torsion du système déformable et une pluralité de premières, respectivement deuxièmes variables d'état représentant un état instantané du système déformable en torsion, dans lequel les premières, respectivement deuxièmes variables d'état sont choisies dans l'ensemble constitué exhaustivement de :

la vitesse de rotation du premier, respectivement deuxième, arbre d'entrée, la vitesse de rotation de l'arbre de sortie, le couple d'entrée agissant sur le premier, respectivement deuxième, arbre d'entrée,
les dérivées et intégrales temporelles à tous les ordres des variables précédentes, et
les combinaisons des variables précédentes et de leurs dérivées et intégrales temporelles à tous les ordres,

et dans lequel les premières, respectivement deuxièmes variables d'état comportent une première, respectivement deuxième variable de sortie choisie dans l'ensemble constitué des vitesses de rotation du premier, respectivement deuxième arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres, calculer les premières, respectivement deuxièmes, variables d'état du premier, respectivement deuxième modèle numérique à des instants successifs en faisant converger la première, respectivement deuxième, variable de sortie avec les vitesses de rotation de l'arbre d'entrée et de l'arbre de sortie mesurées, et déterminer le couple d'entrée (Ce1, Ce2) agissant sur le premier, respectivement deuxième, arbre d'entrée à des instants successifs en fonction des premières, respectivement deuxièmes, variables d'état calculées.

**3.** Procédé selon la revendication 1, dans lequel le modèle numérique comporte en outre un coefficient de frottement visqueux (fp) du système déformable.

**4.** Procédé selon la revendication 1, dans lequel les variables d'état du modèle numérique sont constituées de la vitesse de rotation de l'arbre d'entrée, la dérivée temporelle de la vitesse de rotation de l'arbre d'entrée au premier ordre, la dérivée temporelle du couple d'entrée au premier ordre et la dérivée temporelle du couple d'entrée au deuxième ordre ; la variable de sortie du modèle numérique étant la vitesse de rotation de l'arbre d'entrée.

**5.** Procédé selon la revendication 4, dans lequel on détermine le couple d'entrée par intégration temporelle de la variable d'état égale à la dérivée temporelle du couple d'entrée au premier ordre.

**6.** Procédé selon la revendication 1, dans lequel les variables d'état du modèle numérique comportent la vitesse de rotation de l'arbre de sortie et dans lequel le modèle numérique impose une dynamique prédéfinie de la vitesse de rotation de l'arbre de sortie.

**7.** Procédé selon la revendication 5, dans lequel les variables d'état du modèle numérique sont constituées de la vitesse de rotation de l'arbre d'entrée, la vitesse de rotation de l'arbre de sortie et le couple d'entrée ; les variables de sortie du modèle numérique étant la vitesse de rotation de l'arbre d'entrée et la vitesse de rotation de l'arbre de sortie.

**8.** Procédé selon la revendication 1, dans lequel les variables d'état du modèle numérique sont constituées de la vitesse de rotation de l'arbre d'entrée, la différence entre le couple d'entrée et un couple prélevé par la déformation élastique du système déformable et la dérivée temporelle au premier ordre de la différence entre le couple d'entrée et le couple prélevé par la déformation élastique du système déformable ; la variable de sortie du modèle numérique étant la vitesse de rotation de l'arbre d'entrée.

**9.** Procédé selon la revendication 8, dans lequel on détermine le couple d'entrée à partir de la variable d'état égale à la différence entre le couple d'entrée et le couple prélevé par la déformation élastique du système déformable, le procédé comportant en outre :

calculer une vitesse de déformation instantanée par différence entre la vitesse de rotation de l'arbre d'entrée multiplié par un rapport de transmission actif de la boite de vitesse et la vitesse de rotation de l'arbre de sortie, calculer une intégrale temporelle au premier ordre de la vitesse de déformation instantanée, et calculer le couple prélevé par la déformation élastique du système déformable à partir de l'intégrale temporelle au premier ordre de la vitesse de déformation instantanée.

**10.** Procédé selon la revendication 8 ou 9, dans lequel on détermine le couple d'entrée à partir de la variable d'état égale à la dérivée temporelle au premier ordre de la différence entre le couple d'entrée et le couple prélevé par la déformation élastique du système déformable, le procédé comportant en outre :

calculer une vitesse de déformation instantanée par différence entre la vitesse de rotation de l'arbre d'entrée multiplié par un rapport de transmission actif de la boite de vitesse et la vitesse de rotation de l'arbre de sortie, et calculer une intégrale temporelle au premier ordre de la différence entre ladite variable d'état et un facteur proportionnel à la vitesse de déformation instantanée.

**11.** Procédé selon l'une des revendications 1 à 10, dans lequel la vitesse de rotation de l'arbre d'entrée et/ou la vitesse de rotation de l'arbre de sortie est mesurée à l'aide d'un capteur physique (22a, 22b, 23a, 23b, 26) présentant une résolution angulaire inférieure ou égale à 1/400$^e$ de tour, de préférence inférieure ou égale à 1/600$^e$ de tour.

**12.** Procédé selon l'une des revendications 1 à 11, comportant en outre, pour estimer un couple moteur du moteur du véhicule automobile en fonction du couple d'entrée agissant sur l'arbre d'entrée, les étapes de :

mesurer une vitesse de rotation du moteur,
fournir un modèle numérique de moteur mis en oeuvre par ordinateur (34) qui simule le moteur de véhicule par un système tournant indéformable dans lequel le couple d'entrée est soustrait au couple moteur, le modèle numérique de moteur comportant un moment d'inertie du moteur et un coefficient de frottement visqueux du moteur et une pluralité de variables d'état incluant la vitesse de rotation du moteur et le couple moteur,
calculer les variables d'état du modèle numérique de moteur à des instants successifs en faisant converger la vitesse de rotation du moteur calculée avec la vitesse de rotation du moteur mesurée.

13. Procédé selon la revendication 12, comportant en outre :

détecter que l'arbre d'entrée ou un des arbres d'entrées reçoit la totalité du couple moteur,
estimer le coefficient de raideur de torsion (kt) du modèle numérique qui simule la chaîne de transmission comprenant ledit arbre d'entrée en fonction du couple moteur (Cm) calculé par le modèle numérique de moteur.

14. Système de mesure pour déterminer un couple (Ce1, Ce2) dans une chaîne de transmission de véhicule automobile, convenant pour une chaîne de transmission comportant un arbre d'entrée (4a, 4b) destiné à être accouplé à un moteur du véhicule automobile, un arbre de sortie (7a, 7b, 11) destiné à être accouplé à des roues motrices du véhicule automobile et une boîte de vitesse (5) comportant une pluralité d'engrenages synchroniseurs aptes à respectivement accoupler l'arbre de sortie à l'arbre d'entrée selon une pluralité de rapports de transmission, le système de mesure comportant :

un capteur physique d'entrée (22a, 22b) apte à mesurer une vitesse de rotation de l'arbre d'entrée,
un capteur physique de sortie (23a, 23b, 24, 26) apte à mesurer une vitesse de rotation de l'arbre de sortie,
un dispositif de calcul (32a, 32b) mis en œuvre par ordinateur fournissant un modèle numérique qui simule la chaîne de transmission par un système déformable en torsion, le modèle numérique comportant un coefficient de raideur de torsion (kt) du système déformable, un coefficient d'amortissement visqueux en torsion (lt) du système déformable et une pluralité de variables d'état (X) représentant un état instantané du système déformable en torsion, dans lequel les variables d'état sont choisies dans l'ensemble constitué exhaustivement de : la vitesse de rotation de l'arbre d'entrée (Wp), la vitesse de rotation de l'arbre de sortie (Wv), le couple d'entrée (Ce) agissant sur l'arbre d'entrée,
les dérivées et intégrales temporelles à tous les ordres des variables précédentes, et
les combinaisons des variables précédentes et de leurs dérivées et intégrales temporelles à tous les ordres, et dans lequel les variables d'état comportent une variable de sortie ($\hat{Y}$) choisie dans l'ensemble constitué des vitesses de rotation de l'arbre d'entrée et de l'arbre de sortie, les dérivées et intégrales temporelles à tous les ordres des vitesses de rotation de l'arbre d'entrée et de l'arbre de sortie, et les combinaisons des vitesses de rotation de l'arbre d'entrée et de l'arbre de sortie et de leurs dérivées et intégrales temporelles à tous les ordres, un dispositif de calcul étant apte à calculer les variables d'état (X) du modèle numérique à des instants successifs en faisant converger la variable de sortie $\hat{Y}$ avec les vitesses de rotation de l'arbre d'entrée et de l'arbre de sortie mesurées, et à déterminer le couple d'entrée (Ce) agissant sur l'arbre d'entrée à des instants successifs en fonction des variables d'état calculées.

**Patentansprüche**

1. Verfahren zum Bestimmen eines Drehmoments (Ce) in einer Kraftfahrzeug-Kraftübertragungskette (1), in dem eine Kraftübertragungskette mit einer Eingangswelle (4a, 4b) zum Ankuppeln an einen Motor (2) des Kraftfahrzeugs, einer Ausgangswelle (7a, 7b) zum Ankuppeln an Antriebsräder (13) des Kraftfahrzeugs und einem Getriebe (5) mit einer Vielzahl von Synchronisationsrädern (8a, 8b) verwendet wird, die geeignet sind, die Ausgangswelle gemäß einer Vielzahl von Übersetzungsverhältnissen jeweils an die Eingangswelle anzukuppeln, wobei das Verfahren Folgendes aufweist:

Messen einer Drehzahl (Wp) der Eingangswelle,
Messen einer Drehzahl (Wv) der Ausgangswelle,
Bereitstellen eines per Computer (32a, 32b) durchgeführten numerischen Modells, das die Kraftübertragungskette durch ein torsionsverformbares System simuliert, wobei das numerische Modell einen Torsionssteifigkeitskoeffizienten (kt) des verformbaren Systems aufweist, einen Koeffizienten für viskose Torsionsdämpfung (lt) des verformbaren Systems und eine Vielzahl von Zustandsvariablen (X), die einen momentanen Zustand des torsionsverformbaren Systems darstellen, wobei die Zustandsvariablen aus der Menge ausgewählt werden, die vollständig gebildet wird aus:

der Drehzahl (Wp) der Eingangswelle, der Drehzahl (Wv) der Ausgangswelle, dem Eingangsdrehmoment (Ce), das auf die Eingangswelle wirkt,
den zeitlichen Ableitungen und Integralen aller Ordnungen der vorausgehenden Variablen, und
den Kombinationen aus den vorausgehenden Variablen und ihren zeitlichen Ableitungen und Integralen aller Ordnungen,

und wobei die Zustandsvariablen eine Ausgangsvariable ($\hat{Y}$) aufweisen, die aus der Menge ausgewählt wird, die gebildet wird aus den Drehzahlen (Wp, Wv) der Eingangswelle und der Ausgangswelle, den zeitlichen Ableitungen und Integralen aller Ordnungen der Drehzahlen der Eingangswelle und der Ausgangswelle und den Kombinationen aus den Drehzahlen der Eingangswelle und der Ausgangswelle und ihren zeitlichen Ableitungen und Integralen aller Ordnungen,
Berechnen der Zustandsvariablen (X) des numerischen Modells zu aufeinanderfolgenden Zeitpunkten, indem die Ausgangsvariable ($\hat{Y}$) mit den gemessenen Drehzahlen der Eingangswelle und der Ausgangswelle zusammengeführt wird,
und Bestimmen des Eingangsdrehmoments (Ce), das auf die Eingangswelle wirkt, zu aufeinanderfolgenden Zeitpunkten in Abhängigkeit der berechneten Zustandsvariablen.

2. Verfahren nach Anspruch 1, in dem die verwendete Kraftübertragungskette zwei Eingangswellen (4a, 4b) aufweist, die unabhängig voneinander an den Motor des Kraftfahrzeugs angekuppelt werden sollen, wobei das Getriebe ein erstes Halbgehäuse aufweist, das eine erste Vielzahl von Synchronisationsrädern (8a) enthält, die geeignet sind, die Ausgangswelle gemäß einer ersten Vielzahl von Übersetzungsverhältnissen jeweils an eine erste (4a) der zwei Eingangswellen anzukuppeln, und ein zweites Halbgehäuse, das eine zweite Vielzahl von Synchronisationsrädern (8b) enthält, die geeignet sind, die Ausgangswelle gemäß einer zweiten Vielzahl von Übersetzungsverhältnissen jeweils an eine zweite (4b) der zwei Eingangswellen anzukuppeln,
wobei das Verfahren Folgendes aufweist:

Messen einer Drehzahl von jeder der zwei Eingangswellen (Wp1, Wp2),
Messen einer Drehzahl der Ausgangswelle (Wv),
Bereitstellen eines per Computer (32a, 32b) durchgeführten ersten und zweiten numerischen Modells, die das erste bzw. zweite Halbgehäuse durch ein erstes bzw. zweites torsionsverformbares System simulieren, wobei das erste bzw. zweite numerische Modell einen ersten bzw. zweiten Torsionssteifigkeitskoeffizienten des verformbaren Systems aufweist, einen ersten bzw. zweiten Koeffizienten für viskose Torsionsdämpfung des verformbaren Systems und eine Vielzahl von ersten bzw. zweiten Zustandsvariablen, die einen momentanen Zustand des torsionsverformbaren Systems darstellen, wobei die ersten bzw. zweiten Zustandsvariablen aus der Menge ausgewählt werden, die vollständig gebildet wird aus:

der Drehzahl der ersten bzw. zweiten Eingangswelle, der Drehzahl der Ausgangswelle, dem Eingangsdrehmoment, das auf die erste bzw. zweite Eingangswelle wirkt,
den zeitlichen Ableitungen und Integralen aller Ordnungen der vorausgehenden Variablen, und
den Kombinationen aus den vorausgehenden Variablen und ihren zeitlichen Ableitungen und Integralen aller Ordnungen,

und wobei die ersten bzw. zweiten Zustandsvariablen eine erste bzw. zweite Ausgangsvariable aufweisen, die aus der Menge ausgewählt wird, die gebildet wird aus den Drehzahlen der ersten bzw. zweiten Eingangswelle und der Ausgangswelle, den zeitlichen Ableitungen und Integralen aller Ordnungen der Drehzahlen der Eingangswelle und der Ausgangswelle und den Kombinationen aus den Drehzahlen der Eingangswelle und der Ausgangswelle und ihren zeitlichen Ableitungen und Integralen aller Ordnungen,
Berechnen der ersten bzw. zweiten Zustandsvariablen des ersten bzw. zweiten numerischen Modells zu aufeinanderfolgenden Zeitpunkten, indem die erste bzw. zweite Ausgangsvariable mit den gemessenen Drehzahlen der Eingangswelle und der Ausgangswelle zusammengeführt wird,
und Bestimmen des Eingangsdrehmoments (Ce1, Ce2), das auf die erste bzw. zweite Eingangswelle wirkt, zu aufeinanderfolgenden Zeitpunkten in Abhängigkeit der berechneten ersten bzw. zweiten Zustandsvariablen.

3. Verfahren nach Anspruch 1, in dem das numerische Modell darüber hinaus einen viskosen Reibungskoeffizienten (fp) des verformbaren Systems aufweist.

4. Verfahren nach Anspruch 1, in dem die Zustandsvariablen des numerischen Modells aus der Drehzahl der Eingangswelle, der zeitlichen Ableitung der Drehzahl der Eingangswelle erster Ordnung, der zeitlichen Ableitung des Eingangsdrehmoments erster Ordnung und der zeitlichen Ableitung des Eingangsdrehmoments zweiter Ordnung bestehen; wobei die Ausgangsvariable des numerischen Modells die Drehzahl der Eingangswelle ist.

5. Verfahren nach Anspruch 4, in dem das Eingangsdrehmoment über zeitliche Integration der Zustandsvariablen bestimmt wird, die gleich der zeitlichen Ableitung des Eingangsdrehmoments erster Ordnung ist.

6. Verfahren nach Anspruch 1, in dem die Zustandsvariablen des numerischen Modells die Drehzahl der Ausgangswelle enthalten und in dem das numerische Modell eine vordefinierte Dynamik der Drehzahl der Ausgangswelle vorschreibt.

7. Verfahren nach Anspruch 5, in dem die Zustandsvariablen des numerischen Modells aus der Drehzahl der Eingangswelle, der Drehzahl der Ausgangswelle und dem Eingangsdrehmoment bestehen; wobei die Ausgangsvariablen des numerischen Modells die Drehzahl der Eingangswelle und die Drehzahl der Ausgangswelle sind.

8. Verfahren nach Anspruch 1, in dem die Zustandsvariablen des numerischen Modells aus der Drehzahl der Eingangswelle, der Differenz zwischen dem Eingangsdrehmoment und einem durch die elastische Verformung des verformbaren Systems aufgenommenen Drehmoment und der zeitlichen Ableitung erster Ordnung der Differenz zwischen dem Eingangsdrehmoment und dem durch die elastische Verformung des verformbaren Systems aufgenommenen Drehmoment bestehen; wobei die Ausgangsvariable des numerischen Modells die Drehzahl der Eingangswelle ist.

9. Verfahren nach Anspruch 8, in dem das Eingangsdrehmoment über die Zustandsvariable bestimmt wird, die gleich der Differenz zwischen dem Eingangsdrehmoment und dem durch die elastische Verformung des verformbaren Systems aufgenommenen Drehmoment ist, wobei das Verfahren darüber hinaus Folgendes aufweist:

Berechnen einer momentanen Verformungsgeschwindigkeit aus der Differenz zwischen der Drehzahl der Eingangswelle, multipliziert mit einem aktiven Übersetzungsverhältnis des Getriebes, und der Drehzahl der Ausgangswelle,
Berechnen eines zeitlichen Integrals erster Ordnung der momentanen Verformungsgeschwindigkeit, und
Berechnen des durch die elastische Verformung des verformbaren Systems aufgenommenen Drehmoments über das zeitliche Integral erster Ordnung der momentanen Verformungsgeschwindigkeit.

10. Verfahren nach Anspruch 8 oder 9, in dem das Eingangsdrehmoment über die Zustandsvariable bestimmt wird, die gleich der zeitlichen Ableitung erster Ordnung der Differenz zwischen dem Eingangsdrehmoment und dem durch die elastische Verformung des verformbaren Systems aufgenommenen Drehmoment ist, wobei das Verfahren darüber hinaus Folgendes aufweist:

Berechnen einer momentanen Verformungsgeschwindigkeit aus der Differenz zwischen der Drehzahl der Eingangswelle, multipliziert mit einem aktiven Übersetzungsverhältnis des Getriebes, und der Drehzahl der Ausgangswelle, und
Berechnen eines zeitlichen Integrals erster Ordnung der Differenz zwischen der Zustandsvariablen und einem Faktor, der proportional zur momentanen Verformungsgeschwindigkeit ist.

11. Verfahren nach einem der Ansprüche 1 bis 10, in dem die Drehzahl der Eingangswelle und/oder die Drehzahl der Ausgangswelle mithilfe eines physischen Sensors (22a, 22b, 23a, 23b, 26) gemessen wird, der eine Winkelauflösung kleiner oder gleich einer 1/400 Umdrehung aufweist, vorzugsweise kleiner oder gleich einer 1/600 Umdrehung.

12. Verfahren nach einem der Ansprüche 1 bis 11, das darüber hinaus die folgenden Schritte zum Abschätzen eines Motordrehmoments des Motors des Kraftfahrzeugs in Abhängigkeit vom Eingangsdrehmoment, das auf die Eingangswelle wirkt, aufweist:

Messen einer Drehzahl des Motors,
Bereitstellen eines per Computer (34) durchgeführten numerischen Modells des Motors, das den Motor des Fahrzeugs durch ein nichtverformbares Drehsystem simuliert, in dem das Eingangsdrehmoment vom Motordrehmoment abgezogen wird, wobei das numerische Modell des Motors ein Trägheitsmoment des Motors und einen viskosen Reibungskoeffizienten des Motors und eine Vielzahl von Zustandsvariablen aufweist, zu denen die Drehzahl des Motors und das Motordrehmoment gehören,
Berechnen der Zustandsvariablen des numerischen Modells des Motors zu aufeinanderfolgenden Zeitpunkten, indem die berechnete Drehzahl des Motors mit der gemessenen Drehzahl des Motors zusammengeführt wird.

13. Verfahren nach Anspruch 12, das darüber hinaus Folgendes aufweist:

Erkennen, dass die Eingangswelle oder eine der Eingangswellen das gesamte Motordrehmoment aufnimmt,
Schätzen des Torsionssteifigkeitskoeffizienten (kt) des numerischen Modells, das die Kraftübertragungskette mit der Eingangswelle in Abhängigkeit von dem Motordrehmoment (Cm) simuliert, das von dem numerischen Modell des Motors berechnet wurde.

14. Messsystem zum Bestimmen eines Drehmoments (Ce1, Ce2) in einer Kraftfahrzeug-Kraftübertragungskette, geeignet für eine Kraftübertragungskette mit einer Eingangswelle (4a, 4b) zum Ankuppeln an einen Motor des Kraftfahrzeugs, einer Ausgangswelle (7a, 7b, 11) zum Ankuppeln an Antriebsräder des Kraftfahrzeugs und einem Getriebe (5) mit einer Vielzahl von Synchronisationsrädern, die geeignet sind, die Ausgangswelle gemäß einer Vielzahl von Übersetzungsverhältnissen jeweils an die Eingangswelle anzukuppeln, wobei das System Folgendes aufweist:

einen physischen Eingangssensor (22a, 22b), der zum Messen einer Drehzahl der Eingangswelle geeignet ist,
einen physischen Ausgangssensor (23a, 23b, 24, 26), der zum Messen einer Drehzahl der Ausgangswelle geeignet ist,
eine Vorrichtung zum Berechnen (32a, 32b) durch einen Computer, die ein numerisches Modell bereitstellt, das die Kraftübertragungskette durch ein torsionsverformbares System simuliert, wobei das numerische Modell einen Torsionssteifigkeitskoeffizienten (kt) des verformbaren Systems aufweist, einen Koeffizienten für viskose Torsionsdämpfung (lt) des verformbaren Systems und eine Vielzahl von Zustandsvariablen (X), die einen momentanen Zustand des torsionsverformbaren Systems darstellen, wobei die Zustandsvariablen aus der Menge ausgewählt werden, die vollständig gebildet wird aus:

der Drehzahl der Eingangswelle (Wp), der Drehzahl der Ausgangswelle (Wv), dem Eingangsdrehmoment (Ce), das auf die Eingangswelle wirkt,
den zeitlichen Ableitungen und Integralen aller Ordnungen der vorausgehenden Variablen, und
den Kombinationen aus den vorausgehenden Variablen und ihren zeitlichen Ableitungen und Integralen aller Ordnungen,

und wobei die Zustandsvariablen eine Ausgangsvariable ($\hat{Y}$) aufweisen, die aus der Menge ausgewählt wird, die gebildet wird aus den Drehzahlen der Eingangswelle und der Ausgangswelle, den zeitlichen Ableitungen und Integralen aller Ordnungen der Drehzahlen der Eingangswelle und der Ausgangswelle und den Kombinationen aus den Drehzahlen der Eingangswelle und der Ausgangswelle und ihren zeitlichen Ableitungen und Integralen aller Ordnungen,
eine Vorrichtung zum Berechnen, die geeignet ist zum Berechnen der Zustandsvariablen (X) des numerischen Modells zu aufeinanderfolgenden Zeitpunkten, indem die Ausgangsvariable ($\hat{Y}$) mit den gemessenen Drehzahlen der Eingangswelle und der Ausgangswelle zusammengeführt wird, und zum Bestimmen des Eingangsdrehmoments (Ce), das auf die Eingangswelle wirkt, zu aufeinanderfolgenden Zeitpunkten in Abhängigkeit der berechneten Zustandsvariablen.

**Claims**

1. Method for determining a torque (Ce) in a transmission chain of a motor vehicle (1), in which use is made of a transmission chain comprising an input shaft (4a, 4b) intended to be coupled to an engine (2) of the motor vehicle, an output shaft (7a, 7b) intended to be coupled to drive wheels (13) of the motor vehicle, and a gearbox (5) comprising a plurality of synchromesh gears (8a, 8b) able to respectively couple the output shaft to the input shaft in a plurality of transmission ratios, the method comprising:

measuring a speed of rotation (Wp) of the input shaft,
measuring a speed of rotation (Wv) of the output shaft,
providing a digital model implemented by computer (32a, 32b) that simulates the transmission chain by a torsionally deformable system, the digital model comprising a torsional stiffness coefficient (kt) of the deformable system, a torsional viscous-damping coefficient (lt) of the deformable system and a plurality of state variables (X) representing an instantaneous state of the torsionally deformable system, in which the state variables are chosen from the set consisting exhaustively of:

the speed of rotation (Wp) of the input shaft, the speed of rotation (Wv) of the output shaft, the input torque (Ce) acting on the input shaft,
the time derivatives and integrals of all orders of the preceding variables, and
the combinations of the preceding variables and of their time derivatives and integrals of all orders,

and in which the state variables comprise an output variable ($\hat{Y}$) chosen from the set consisting of the speeds of rotation (Wp, Wv) of the input shaft and of the output shaft, the time derivatives and integrals of all orders of the speeds of rotation of the input shaft and of the output shaft, and the combinations of the speeds of rotation of the input shaft and of the output shaft and of their time derivatives and integrals of all orders,
calculating the state variables (X) of the digital model at successive instants by converging the output variable ($\hat{Y}$) with the measured speeds of rotation of the input shaft and of the output shaft,
and determining the input torque (Ce) acting on the input shaft at successive instants as a function of the calculated state variables.

2. Method according to Claim 1, in which the transmission chain used comprises two input shafts (4a, 4b) intended to be coupled to the engine of the motor vehicle independently of one another, the gearbox comprising a half gearbox comprising a first plurality of synchromesh gears (8a) able to respectively couple the output shaft to a first (4a) of the two input shafts in a first plurality of transmission ratios, and a second gearbox comprising a second plurality of synchromesh gears (8b) able to respectively couple the output shaft to a second (4b) of the two input shafts in a second plurality of transmission ratios,
in which the method comprises:

measuring a speed of rotation of each of the two input shafts (Wp1, Wp2),
measuring a speed of rotation of the output shaft (Wv), providing a first and a second digital model implemented by computer (32a, 32b) that simulate the first and, respectively, second half gearbox by a first and, respectively, second torsionally deformable system, the first and, respectively, second digital model comprising a first and, respectively, second torsional stiffness coefficient of the deformable system, a first and, respectively, second torsional viscous-damping coefficient of the deformable system and a plurality of first and, respectively, second state variables representing an instantaneous state of the torsionally deformable system, in which the first and, respectively, second state variables are chosen from the set consisting exhaustively of:

the speed of rotation of the first and, respectively, second input shaft, the speed of rotation of the output shaft, the input torque acting on the first and, respectively, second input shaft,
the time derivatives and integrals of all orders of the preceding variables, and
the combinations of the preceding variables and of their time derivatives and integrals of all orders,

and in which the first and, respectively, second state variables comprise a first and, respectively, second output variable chosen from the set consisting of the speeds of rotation of the first and, respectively, second input shaft and of the output shaft, the time derivatives and integrals of all orders of the speeds of rotation of the input shaft and of the output shaft, and the combinations of the speeds of rotation of the input shaft and of the output shaft and of their time derivatives and integrals of all orders,
calculating the first and, respectively, second state variables of the first and, respectively, second digital model at successive instants by converging the first and, respectively, second output variable with the measured speeds of rotation of the input shaft and of the output shaft,
and determining the input torque (Ce1, Ce2) acting on the first and, respectively, second input shaft at successive instants as a function of the calculated first and, respectively, second state variables.

3. Method according to Claim 1, in which the digital model additionally comprises a coefficient of viscous friction (fp) of the deformable system.

4. Method according to Claim 1, in which the state variables of the digital model consist of the speed of rotation of the input shaft, the time derivative of the speed of rotation of the input shaft of the first order, the time derivative of the input torque of the first order and the time derivative of the input torque of the second order; the output variable of the digital model being the speed of rotation of the input shaft.

5.  Method according to Claim 4, in which the input torque is determined by time integration of the state variable equal to the time derivative of the input torque of the first order.

6.  Method according to Claim 1, in which the state variables of the digital model comprise the speed of rotation of the output shaft, and in which the digital model imposes predefined dynamics of the speed of rotation of the output shaft.

7.  Method according to Claim 5, in which the state variables of the digital model consist of the speed of rotation of the input shaft, the speed of rotation of the output shaft and the input torque; the output variables of the digital model being the speed of rotation of the input shaft and the speed of rotation of the output shaft.

8.  Method according to Claim 1, in which the state variables of the digital model consist of the speed of rotation of the input shaft, the difference between the input torque and a torque taken by the elastic deformation of the deformable system and the time derivative of the first order of the difference between the input torque and the torque taken by the elastic deformation of the deformable system; the output variable of the digital model being the speed of rotation of the input shaft.

9.  Method according to Claim 8, in which the input torque is determined from the state variable equal to the difference between the input torque and the torque taken by the elastic deformation of the deformable system, the method additionally comprising:

    calculating an instantaneous deformation speed by difference between the speed of rotation of the input shaft multiplied by an active transmission ratio of the gearbox and the speed of rotation of the output shaft,
    calculating a time integral of the first order of the instantaneous deformation speed, and
    calculating the torque taken by the elastic deformation of the deformable system from the time integral of the first order of the instantaneous deformation speed.

10. Method according to Claim 8 or 9, in which the input torque is determined from the state variable equal to the time derivative of the first order of the difference between the input torque and the torque taken by the elastic deformation of the deformable system, the method additionally comprising:

    calculating an instantaneous deformation speed by difference between the speed of rotation of the input shaft multiplied by an active transmission ratio of the gearbox and the speed of rotation of the output shaft, and
    calculating a time integral of the first order of the difference between said state variable and a factor proportional to the instantaneous deformation speed.

11. Method according to one of Claims 1 to 10, in which the speed of rotation of the input shaft and/or the speed of rotation of the output shaft are/is measured using a physical sensor (22a, 22b, 23a, 23b, 26) having an angular resolution of less than or equal to 1/400th of one revolution, preferably less than or equal to 1/600th of one revolution.

12. Method according to one of Claims 1 to 11, additionally comprising, in order to estimate an engine torque of the engine of the motor vehicle as a function of the input torque acting on the input shaft, the steps of:

    measuring a speed of rotation of the engine,
    providing a digital engine model implemented by computer (34) that simulates the vehicle engine by a non-deformable rotating system in which the input torque is subtracted from the engine torque, the digital engine model comprising a moment of inertia of the engine and a coefficient of viscous friction of the engine and a plurality of state variables including the speed of rotation of the engine and the engine torque,
    calculating the state variables of the digital engine model at successive instants by converging the calculated speed of rotation of the engine with the measured speed of rotation of the engine.

13. Method according to Claim 12, additionally comprising:

    detecting that the input shaft or one of the input shafts receives all of the engine torque,
    estimating the torsional stiffness coefficient (kt) of the digital model that simulates the transmission chain comprising said input shaft as a function of the engine torque (Cm) calculated by the digital engine model.

14. Measuring system for determining a torque (Ce1, Ce2) in a transmission chain of a motor vehicle, suitable for a transmission chain comprising an input shaft (4a, 4b) intended to be coupled to an engine of the motor vehicle, an output shaft (7a, 7b, 11) intended to be coupled to drive wheels of the motor vehicle, and a gearbox (5) comprising a plurality of synchromesh gears able to respectively couple the output shaft to the input shaft in a plurality of transmission ratios, the measuring system comprising:

a physical input sensor (22a, 22b) able to measure a speed of rotation of the input shaft,
a physical output sensor (23a, 23b, 24, 26) able to measure a speed of rotation of the output shaft,
a calculating device (32a, 32b) implemented by computer providing a digital model that simulates the transmission chain by a torsionally deformable system, the digital model comprising a torsional stiffness coefficient (kt) of the deformable system, a torsional viscous-damping coefficient (It) of the deformable system and a plurality of state variables (X) representing an instantaneous state of the torsionally deformable system, in which the state variables are chosen from the set consisting exhaustively of:

the speed of rotation (Wp) of the input shaft, the speed of rotation (Wv) of the output shaft, the input torque (Ce) acting on the input shaft,
the time derivatives and integrals of all orders of the preceding variables, and
the combinations of the preceding variables and of their time derivatives and integrals of all orders,
and in which the state variables comprise an output variable ($\hat{Y}$) chosen from the set consisting of the speeds of rotation of the input shaft and of the output shaft, the time derivatives and integrals of all orders of the speeds of rotation of the input shaft and of the output shaft, and the combinations of the speeds of rotation of the input shaft and of the output shaft and of their time derivatives and integrals of all orders,

a calculating device being able to calculate the state variables (X) of the digital model at successive instants by converging the output variable $\hat{Y}$ with the measured speeds of rotation of the input shaft and of the output shaft, and to determine the input torque (Ce) acting on the input shaft at successive instants as a function of the calculated state variables.

FIG.1

EP 3 047 171 B1

FIG.2

FIG.3

FIG.4

FIG.5

FIG.6

$$X = \begin{bmatrix} W_p \\ W_v \\ C_e \end{bmatrix} \qquad u = \alpha_t \qquad A_{ob} = \begin{bmatrix} \dfrac{-(f_p + q^2 \cdot \ell t)}{J_p} & \dfrac{q \cdot \ell t}{J_p} & \dfrac{1}{J_p} \\ 0 & -\dfrac{1}{\theta} & 0 \\ 0 & 0 & 0 \end{bmatrix} \qquad B_{ob} = \begin{bmatrix} \dfrac{-q \cdot kt}{J_p} \\ 0 \\ 0 \end{bmatrix} \qquad C_{ob} = \begin{bmatrix} 1 & 0 & 0 \\ 0 & 1 & 0 \end{bmatrix}$$

$$K = \begin{bmatrix} k_{21} & 0 \\ 0 & k_{24} \\ 0 & 0 \end{bmatrix}$$

FIG.7

FIG.8

FIG.9

EP 3 047 171 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2010007321 A
- FR 2934026 A1
- FR 2863327 A